# EUROPEAN PATENT APPLICATION

(11) **EP 3 889 420 A1**
(43) Date of publication of application: **06.10.2021**
(21) Application number: 21162547.0
(22) Date of filing: 15.03.2021
(51) Int. Cl.: F02P 17/12, F02P 9/00, F02P 15/08

(54) **MISFIRE DETECTOR**

(30) Priority: 31.03.2020 JP 2020064277; 02.06.2020 JP 2020095868
(71) Applicant: HONDA MOTOR CO., LTD., Minato-ku Tokyo 107-8556 (JP)
(72) Inventor: Kishi, Nobuyuki, Tokyo, 107-8556 (JP); Tomoda, Akihiko, Tokyo, 107-8556 (JP); Yamashita, Akihiko, Tokyo, 107-8556 (JP); Niimura, Ryuta, Tokyo, 107-8556 (JP)
(74) Representative: Beder, Jens

(57) **Abstract**

The present invention focuses on a relationship between indicated pressure and required breakdown voltage in a term without assistance of ions for breakdown, that is, a phenomenon in which the required breakdown voltage is lowered because indicated pressure at the time of misfire becomes lower than that at the time of combustion. Thus, a misfire is detected by determining occurrence of breakdown when additional ignition is performed in the term without the assistance for breakdown, from voltage or electric current of an ignition coil. A misfire detector 100 includes a regular ignition timing calculator 101 that calculates a regular ignition timing. A regular ignition signal generator 102 generates a regular ignition signal P1 at the regular ignition timing. An additional ignition timing calculator 103 calculates a certain timing in an expansion stroke immediately after the regular ignition, as an additional ignition timing. An additional ignition signal generator 104 generates an additional ignition signal P2 at the additional ignition timing. A breakdown determination unit 105 determines whether breakdown occurs in an ignition coil 10 by the additional ignition, based on output of a voltage measuring circuit 40.

## Description

### BACKGROUND

### 1. Technical Field

The present invention relates to a misfire detector for detecting a misfire of an engine, and in particular, relates to a misfire detector that detects a misfire based on whether breakdown occurs in an ignition plug by additional ignition that is performed in an expansion stroke immediately after regular ignition. 2. Description of the Background

In recent years, a study is underway to employ the misfire detection technology also in motorcycles from points of view of improvement in repairability and environmental protection. As for four-wheeled vehicles, a known technique for detecting a misfire of an engine involves monitoring variation in combustion torque due to a misfire, in terms of variation in crank angular velocity. More specifically, a crank angular velocity is measured based on a time interval of generation of a crank pulse, which is a time interval between crank pulses, and variation in this velocity is used as a misfire parameter.

However, in addition to differences in interval between teeth of a crank pulse rotor, inertia torque, pumping torque, friction due to load, and disturbances due to auxiliary devices and a drive system, affect the crank angular velocity, and therefore, these error causes should be eliminated in order to accurately determine a misfire.

With regard to such a technical problem, Patent literature 1 discloses a misfire detection method using ionic current. According to Patent literature 1, voltage is applied again to an ignition plug during an expansion stroke immediately after main spark discharge for igniting air-fuel mixture in a cylinder, and occurrence of a misfire is detected by determining whether discharge occurs in the cylinder at that time.

Patent literature 1 is based on the following principle. When normal combustion occurs, conductive ions are generated and exist in the vicinity of an electrode of the ignition plug, and thus, breakdown or discharge occurs by the reignition that is performed in the state in which voltage required for breakdown is lowered. On the other hand, if a misfire occurs, ions are not generated, and the required breakdown voltage is not lowered, whereby no breakdown occurs.

### CITATION LIST

### PATENT LITERATURE

Patent literature 1: Japanese Unexamined Patent Application Laid-Open No. 2003-222066

### BRIEF SUMMARY

The technique of detecting a misfire disclosed in Patent literature 1 is based on the premise that ions are generated to lower the voltage required for breakdown when normal combustion occurs. The ions use weak current, which can cause low noise toughness.

The present invention focuses on a relationship between indicated pressure and required breakdown voltage in a term without assistance of ions for breakdown, that is, a phenomenon in which the required breakdown voltage is lowered because indicated pressure at the time of misfire becomes relatively lower than that at the time of combustion. Thus, an object of the present invention is to solve the above technical problem and to provide a misfire detector that detects a misfire by determining occurrence of breakdown when additional ignition is performed in the term without the assistance for breakdown, from generated voltage or flowing electric current in an ignition coil.

To achieve the above object, the present invention has the following features in a misfire detector (100) of an internal combustion engine, in which an ignition plug (50) is regularly ignited in the vicinity of a compression top dead center of the internal combustion engine, to burn air-fuel mixture.
(1) The present invention has a first feature in that the misfire detector (100) includes units (103, 104) and a unit (105). The units (103, 104) are configured to additionally ignite the ignition plug (50) in an expansion stroke after the regular ignition. The unit (105) is configured to determine whether breakdown occurs in the ignition plug (50) by the additional ignition. The misfire detector (100) is configured to judge that the regular ignition results in a misfire in response to determination that breakdown occurs in the ignition plug (50).
(2) The present invention has a second feature in that the ignition plug (50) is connected to a secondary coil of an ignition coil (10), in which a primary coil and the secondary coil are magnetically joined to each other, and the primary coil is configured to generate induced voltage in the secondary coil in response to cutting off electric current that is supplied to the primary coil. In this case, the unit (105) determines whether breakdown occurs in the ignition plug (50), based on voltage that is generated in the primary coil in a certain determination period after the additional ignition.
(3) The present invention has a third feature in that the certain determination period is set to a time period after the additional ignition, between a time when voltage of the primary coil becomes approximately zero in a case in which the regular ignition results in normal combustion, and a time when the voltage of the primary coil becomes approximately zero in a case in which the regular ignition results in a misfire.
(4) The present invention has a fourth feature in that the ignition plug (50) is connected to a secondary coil of an ignition coil (10), in which a primary coil and the secondary coil are magnetically joined to each other, and the primary coil is configured to generate induced voltage in the secondary coil in response to cutting off electric current that is supplied to the primary coil. In this case, the unit (105) determines whether breakdown occurs in the ignition plug (50), based on electric current that flows in the primary coil in a certain determination period after the additional ignition.
(5) The present invention has a fifth feature in that the ignition plug (50) is connected to a secondary coil of an ignition coil (10), in which a primary coil and the secondary coil are magnetically joined to each other, and the primary coil is configured to generate induced voltage in the secondary coil in response to cutting off electric current that is supplied to the primary coil. In this case, the unit (105) determines whether breakdown occurs in the ignition plug (50), based on voltage that is generated in the secondary coil in a certain determination period after the additional ignition.
(6) The present invention has a sixth feature in that the ignition plug (50) is connected to a secondary coil of an ignition coil (10), in which a primary coil and the secondary coil are magnetically joined to each other, and the primary coil is configured to generate induced voltage in the secondary coil in response to cutting off electric current that is supplied to the primary coil. In this case, the unit (105) determines whether breakdown occurs in the ignition plug (50), based on electric current that flows in the secondary coil in a certain determination period after the additional ignition.

The present invention achieves the following effects.
(1) In the present invention, the misfire detector (100) includes the units (103, 104) and the unit (105). The units (103, 104) are configured to additionally ignite the ignition plug (50) in the expansion stroke after the regular ignition. The unit (105) is configured to determine whether breakdown occurs in the ignition plug (50) by the additional ignition. The misfire detector (100) is configured to judge that the regular ignition results in a misfire in response to determination that breakdown occurs in the ignition plug (50). This structure enables determination using difference in required breakdown voltage due to the indicated pressure, whereby toughness with respect to detection of a misfire is improved.
(2) In the present invention, the ignition plug (50) is connected to the secondary coil of the ignition coil (10), in which the primary coil and the secondary coil are magnetically joined to each other, and the primary coil is configured to generate induced voltage in the secondary coil in response to cutting off electric current that is supplied to the primary coil. The unit (105) determines whether breakdown occurs in the ignition plug (50), based on voltage that is generated in the primary coil in the certain determination period after the additional ignition. This structure enables misfire detection based on the primary side voltage lower than the secondary side voltage. Thus, the mechanism for measuring the voltage can be made simple and light-weight at a low cost.
(3) In the present invention, the certain determination period is set to the time period after the additional ignition, between the time when the voltage of the primary coil becomes approximately zero in the case in which the regular ignition results in normal combustion, and the time when the voltage of the primary coil becomes approximately zero in the case in which the regular ignition results in a misfire. This enables misfire detection at the time when the difference in voltage between in the case of normal combustion and in the case of a misfire significantly and reliably appears, whereby toughness with respect to detection of a misfire is improved.
(4) In the present invention, the ignition plug (50) is connected to the secondary coil of the ignition coil (10), in which the primary coil and the secondary coil are magnetically joined to each other, and the primary coil is configured to generate induced voltage in the secondary coil in response to cutting off electric current that is supplied to the primary coil. The unit (105) determines whether breakdown occurs in the ignition plug (50), based on electric current that flows in the primary coil in the certain determination period after the additional ignition. Herein, a high correlation is shown between the voltage generated in the primary coil and the electric current flowing in the primary coil, and therefore, on the condition that the electric current flowing in the primary coil is easily and accurately measured, toughness with respect to detection of a misfire can be improved.
(5) In the present invention, the ignition plug (50) is connected to the secondary coil of the ignition coil (10), in which the primary coil and the secondary coil are magnetically joined to each other, and the primary coil is configured to generate induced voltage in the secondary coil in response to cutting off electric current that is supplied to the primary coil. The unit (105) determines whether breakdown occurs in the ignition plug (50), based on voltage that is generated in the secondary coil in the certain determination period after the additional ignition. Herein, a high correlation is shown between the voltage generated in the primary coil and the voltage generated in the secondary coil, and therefore, on the condition that the voltage of the secondary coil is easily and accurately measured, toughness with respect to detection of a misfire can be improved.
(6) In the present invention, the ignition plug (50) is connected to the secondary coil of the ignition coil (10), in which the primary coil and the secondary coil are magnetically joined to each other, and the primary coil is configured to generate induced voltage in the secondary coil in response to cutting off electric current that is supplied to the primary coil. The unit (105) determines whether breakdown occurs in the ignition plug (50), based on electric current that flows in the secondary coil in the certain determination period after the additional ignition. Herein, a high correlation is shown between the voltage generated in the primary coil and the electric current flowing in the secondary coil, and therefore, on the condition that the electric current flowing in the secondary coil is easily and accurately measured, toughness with respect to detection of a misfire can be improved.

### BRIEF DESCRIPTION OF DRAWINGS

FIG. 1 is a diagram showing a configuration of a main section of an engine ignition system including a misfire detector according to an embodiment of the present invention.
FIG. 2 is a diagram schematically showing variation in indicated pressure in a cylinder in cases in which regular ignition results in normal combustion or a misfire.
FIG. 3 is a diagram schematically showing variation in primary side voltage of an ignition coil in the cases in which regular ignition results in normal combustion or a misfire.
FIG. 4 is a flowchart showing operation in the embodiment of the present invention.

### DETAILED DESCRIPTION

An embodiment of the present invention will be described in detail with reference to the drawings, hereinafter. In the present invention, regular ignition is performed in the vicinity of a compression top dead center (TDC), which is fixed or steadily determined based on such as the number of rotations of an engine. Moreover, second ignition is additionally performed in an expansion stroke after the regular ignition, as additional ignition. Then, whether the preceding regular ignition results in a misfire is determined based on occurrence of breakdown between electrodes of an ignition plug by the additional ignition.

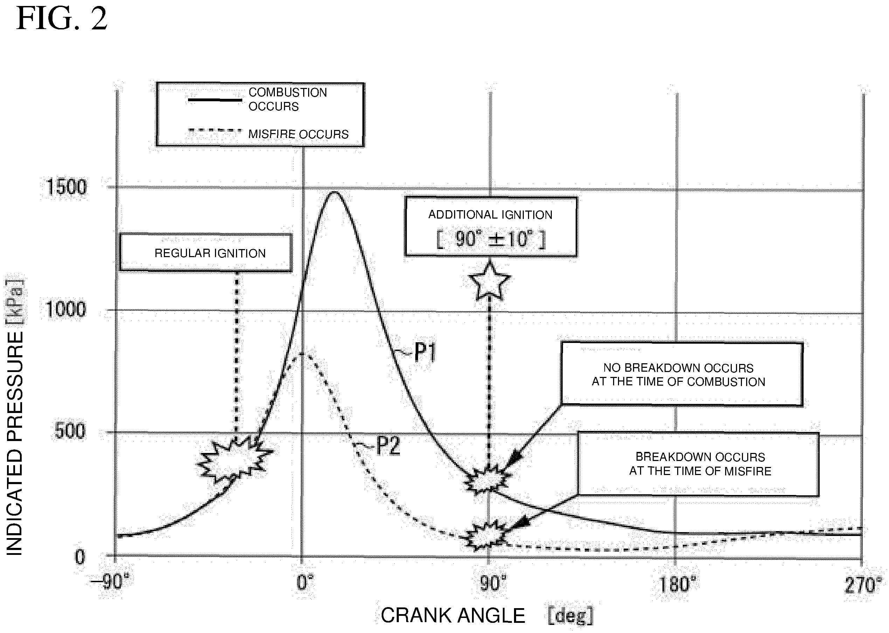

FIG. 2 is a diagram schematically showing variation in indicated pressure in cases in which regular ignition results in normal combustion or a misfire. When air-fuel mixture in a cylinder is normally burned by the regular ignition in the vicinity of the TDC, the indicated pressure in the cylinder increases and is maintained correspondingly high in an expansion stroke after the TDC.

On the other hand, if the regular ignition results in a misfire, the indicated pressure does not increase as much as that increases at the time of normal combustion. In addition, the indicated pressure starts to fall earlier than the time when normal combustion occurs, in the expansion stroke after the TDC. Thus, for example, during the expansion stroke, the indicated pressure at the time of normal combustion is relatively high compared with that at the time of misfire.

In the condition that the regular ignition results in a misfire, the indicated pressure is low compared with that at the time of normal combustion, whereby required breakdown voltage is relatively lowered. In view of this, breakdown can be made to occur between electrodes of the ignition plug only in the case of misfire by appropriately setting a second application voltage so as to be lower than a first application voltage for the regular ignition.

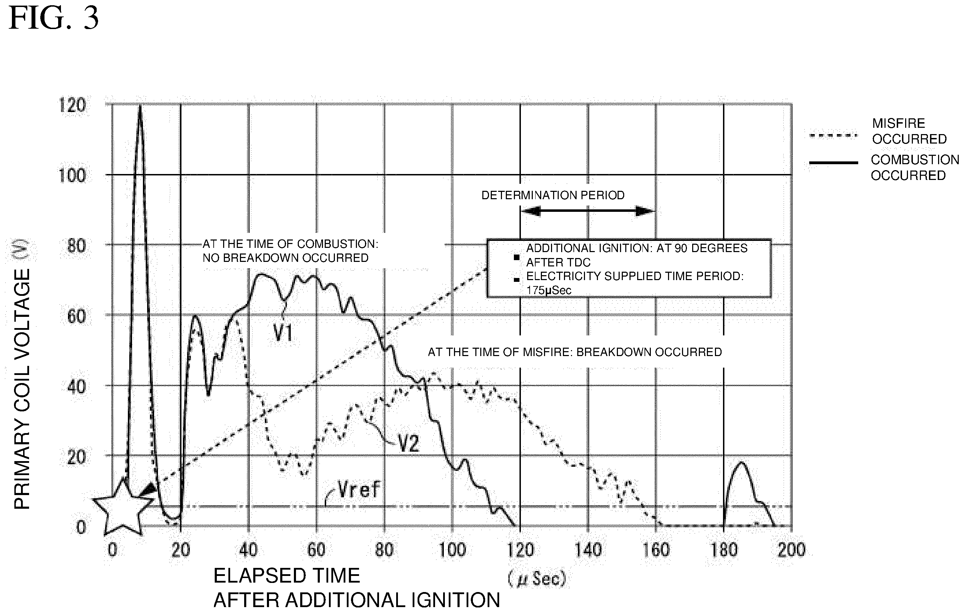

On the other hand, the inventors of the present invention compared variation in voltage of a primary coil of the ignition coil in the case in which breakdown occurred by the additional ignition, with that in the case in which breakdown did not occur. This comparison showed that a significant difference was reliably generated, in particular, in a certain time period during an expansion stroke immediately after the regular ignition, depending on occurrence of breakdown, as shown in FIG. 3.

Specifically, the comparison showed that, when the additional ignition was performed, a difference in voltage of the primary coil of the ignition coil was significantly and reliably generated in a time period between the time when this voltage became approximately zero in the case in which no breakdown occurred in the ignition plug, and the time when this voltage became approximately zero in the case in which breakdown occurred. In the case of FIG. 3, this time period is from approximately 120 µsec to approximately 160 µsec after the additional ignition. Such a time period is generated due to the following reasons.

That is, when breakdown does not occur by the additional ignition, magnetic energy that is stored on a secondary side of the ignition coil causes charge transfer or resonance due to capacitances of the coil and the secondary circuit, while being damped by resistance of the circuit. This resonance phenomenon produces variation in magnetic flux, which induces voltage in the primary coil. In the condition in which a diode is mounted to the primary coil, electric current that is induced by the secondary coil is prevented from flowing in a forward direction of the diode, that is, the primary side potential is prevented from being negative to a large degree. The potential of the primary coil becomes approximately zero at this time.

When breakdown occurs by the additional ignition, the magnetic energy that is stored in the secondary coil is released on the ignition plug side. The variation in potential of the secondary coil produces magnetic flux, which induces primary coil voltage. The voltage of the primary coil moderately varies until the discharge on the ignition plug side ceases, and it finally reaches approximately zero.

In consideration of this, in this embodiment, whether the regular ignition results in a misfire is detected by monitoring variation in the primary side voltage of the ignition coil at the time of additional ignition. The additional ignition is performed by applying voltage (second application voltage) that is set to an appropriate value lower than an application voltage (first application voltage) for the regular ignition, so as to not cause breakdown when air-fuel mixture is normally burned by the regular ignition but to cause breakdown when the regular ignition results in a misfire.

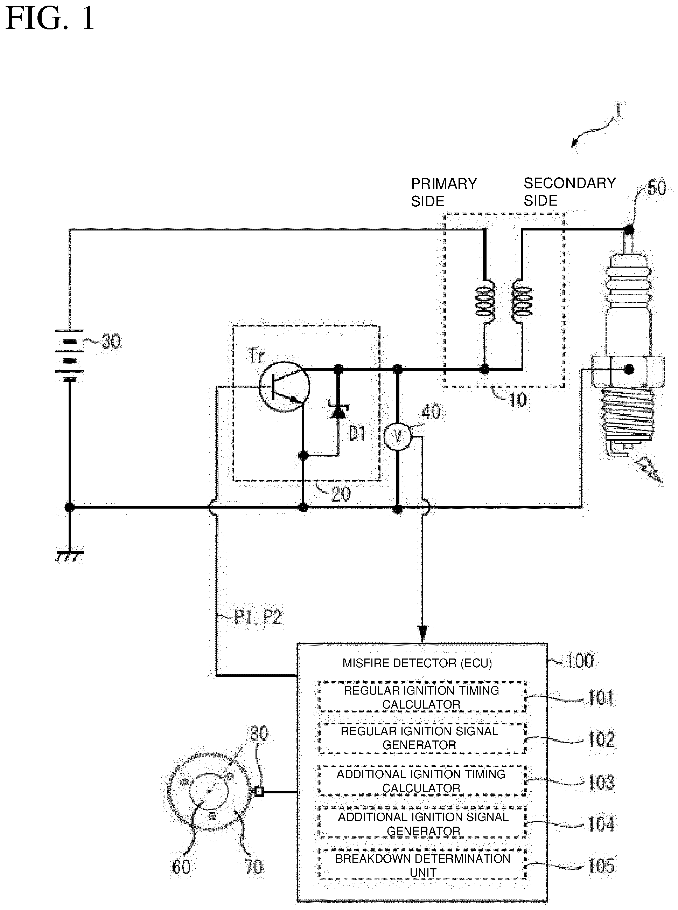

FIG. 1 is a diagram showing a configuration of a main section of an engine ignition system 1 including a misfire detector 100 according to an embodiment of the present invention.

An ignition unit 20 is serially connected to a primary side of an ignition coil 10, and a battery 30 is connected in parallel to this serial connection. A voltage measuring circuit 40 is connected in parallel to the ignition unit 20. The voltage measuring circuit 40 measures a primary side voltage V, which is output to the misfire detector 100. An ignition plug 50 is connected to a secondary side of the ignition coil 10.

The ignition unit 20 includes a grounded-emitter transistor Tr as a current cut-off switch. The transistor Tr has a collector terminal that is connected to an end of the primary coil, and a Zener diode D1 is connected in parallel between an emitter and a base. The base terminal of the transistor Tr receives ignition signals P (PI and P2) from the misfire detector 100.

The misfire detector 100 is connected to a crank pulse sensor 80. The crank pulse sensor 80 measures a rotation position of a crank pulse rotor 70 that rotates synchronously with a crankshaft 60 of an engine, and the crank pulse sensor 80 outputs a crank pulse signal in the vicinity of a compression top dead center of the engine.

The misfire detector 100 includes a regular ignition timing calculator 101 that calculates a regular ignition timing based on the output signal of the crank pulse sensor 80 as well as engine parameters such as a number of rotations of the engine and a throttle opening. A regular ignition signal generator 102 generates a regular ignition signal PI at the regular ignition timing.

An additional ignition timing calculator 103 calculates a certain timing in an expansion stroke immediately after the regular ignition, as an additional ignition timing. In this embodiment, as shown in FIG. 2, the additional ignition timing is in a crank angle range of 90 ± 10 degrees from the TDC. An additional ignition signal generator 104 generates an additional ignition signal P2 at the additional ignition timing. Thus, the misfire detector 100 outputs the regular ignition signal PI and the additional ignition signal P2 at the respective timings.

A breakdown determination unit 105 determines whether breakdown occurs in the ignition coil 10 due to the second application voltage for the additional ignition, based on the output of the voltage measuring circuit 40. As shown in FIG. 3, an observation revealed that the primary side voltage V after the additional ignition timing declined steadily over time in the case of normal combustion, but tended to start declining later in the case of a misfire, in accordance with variation in a secondary side electric current due to breakdown. As a result, there was a significant difference in the time until the primary side voltage V became approximately zero, between in the case of normal combustion and in the case of a misfire.

On the basis of this phenomenon, in this embodiment, a determination period is set to a time period after the additional ignition timing, between the time when the primary side voltage V (VI) becomes approximately zero in the case of normal combustion, and the time when the primary side voltage V (V2) becomes approximately zero in the case of a misfire. For example, the determination period is set to a time period from approximately 120 µsec to approximately 160 µsec after the TDC, that is, 140 ± 20 µsec after the additional ignition.

Note that the time period after the additional ignition timing, between the time when the primary side voltage V1 becomes approximately zero in the case of normal combustion, and the time when the primary side voltage V2 becomes approximately zero in the case of a misfire, depends on engine specifications and a driving state of the engine. Thus, the determination period is not limited to the time period of 140 ± 20 µsec and is desirably set in accordance with factors such as ignition circuit characteristics, engine specifications, and a driving state of the engine, in an appropriate manner.

The breakdown determination unit 105 compares the primary side voltage V of the ignition coil 10 that is measured in the determination period, with a certain determination threshold Vref. In the case in which V ≥ Vref, the breakdown determination unit 105 determines that breakdown occurs by the additional ignition. In response to the determination that breakdown occurs, which is performed by the breakdown determination unit 105, the misfire detector 100 detects a misfire of the preceding regular ignition.

This misfire detector 100 can be constructed by installing an application or a program for implementing each function described later, in a general-purpose computer or an ECU equipped with a CPU, a memory, an interface, buses for connecting them, and so on. Alternatively, the misfire detector 100 can also be constructed as a dedicated device or a single-purpose device in which one or more applications are implemented by hardware or programmed.

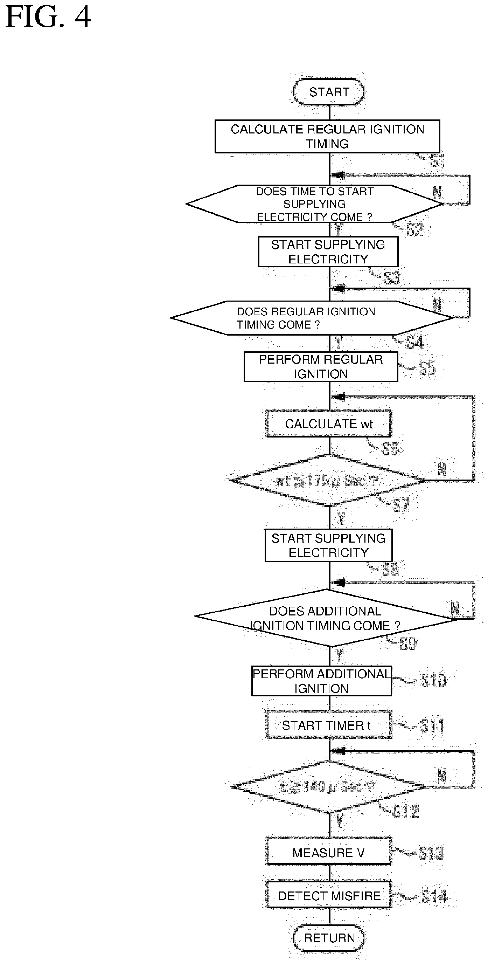

FIG. 4 is a flowchart showing operation in this embodiment. Herein, the following description is based on these assumptions: the additional ignition timing is set at a crank angle index of 90 degrees, the time to measure the primary side voltage of the ignition coil 10 is set at the time after 140 µsec lapses from the additional ignition timing, and the time period for supplying electricity to the primary side of the ignition coil 10 is set to 175 µsec, in preparation for the additional ignition.

In step S1, the regular ignition timing is calculated based on a crank pulse signal and engine parameters. Moreover, the time before the regular ignition timing only by the time period for supplying electricity to the primary coil of the ignition coil 10 for the regular ignition, is calculated, as a time to start supplying electricity for the regular ignition.

In step S2, when the time to start supplying electricity for the regular ignition comes, the processing advances to step S3, and electricity for the regular ignition is started to be supplied to the primary coil. In step S4, whether the determined regular ignition timing comes is judged. When the regular ignition timing comes, the processing advances to step S5, and the regular ignition is performed.

In step S6, on the basis of the current crank angle and the number of rotations of the engine, a wait time wt until the additional ignition timing, which is 90 degrees after the TDC, is calculated. In step S7, whether wt ≤ 175 µsec is determined. If the determination result is not wt ≤ 175 µsec, the processing returns to step S6 and waits.

If the determination result is wt ≤ 175 µsec in step S7, the processing advances to step S8, and electricity for the additional ignition is started to be supplied to the primary coil of the ignition coil 10. In step S9, whether the additional ignition timing comes is judged based on the crank angle. In response to the result that the crank angle is 90 degrees, which is calculated by the additional ignition timing calculator 103, it is judged that the additional ignition timing comes, and the processing advances to step S10.

In step S10, the additional ignition signal generator 104 outputs the additional ignition signal P2, and the additional ignition is thereby performed. At this time, electricity is already supplied to the primary coil for 175 µsec, and thus, a certain voltage (second application voltage), which is lower than the voltage for the regular ignition, is applied to the ignition plug 50 by the additional ignition.

In step S11, an elapsed-time timer t starts. In step S12, whether a voltage measurement time comes is determined based on the timer t. If the voltage measurement time has not yet come, the processing returns to step S12.

Thereafter, when the timer t indicates 140 µsec, it is judged that the voltage measurement time comes, and the processing advances to step S13. In step S13, the primary side voltage V of the ignition coil 10 is measured. In step S14, the breakdown determination unit 105 compares the primary side voltage V with the breakdown determination threshold Vref. If V ≥ Vref, it is determined that breakdown occurs and the regular ignition results in a misfire. If V < Vref, it is determined that breakdown does not occur and the regular ignition results in normal combustion.

In this embodiment, a misfire is detected based on the primary side voltage of the ignition coil at the time the additional ignition is performed in the expansion stroke immediately after the regular ignition, which the primary side voltage significantly varies depending on whether the regular ignition results in a misfire. This enables misfire detection using difference in required breakdown voltage due to the indicated pressure, whereby toughness with respect to detection of a misfire is improved.

In addition, in this embodiment, whether breakdown occurs in the ignition plug is determined based on the voltage that is generated in the primary coil by the additional ignition. This enables misfire detection based on the primary side voltage lower than the secondary side voltage. Thus, the mechanism for measuring the voltage can be made simple and light-weight at a low cost.

Moreover, in this embodiment, the determination period is set to the time period after the additional ignition, between the time when the voltage of the primary coil becomes approximately zero in the case in which the regular ignition results in normal combustion, and the time when the voltage of the primary coil becomes approximately zero in the case in which the regular ignition results in a misfire. This enables misfire detection at the time when the difference in voltage between in the case of normal combustion and in the case of a misfire significantly and reliably appears, whereby toughness with respect to detection of a misfire is improved.

Note that, although occurrence of a misfire is determined based on the primary side voltage V of the ignition coil 10 in the above embodiment, the present invention is not limited thereto. That is, occurrence of a misfire may be determined based on a primary side electric current, a secondary side voltage, or a secondary side electric current, because a high correlation is observed between the primary side voltage V, and the primary side electric current, the secondary side voltage, or the secondary side electric current.

On the condition that a misfire is detected based on electric current of the primary coil of the ignition coil 10, a misfire can be accurately detected even in a case in which the primary coil voltage is difficult to monitor, for example, due to an igniter being disposed outside of an ECU.

In addition, on the condition that a misfire is detected based on voltage or electric current of the secondary coil of the ignition coil 10, a misfire can be accurately detected even in a case in which it is difficult to make a physical connection with the primary coil.

### Reference Signs List

1···engine ignition system, 10···ignition coil, 20···ignition unit, 30···battery, 40···voltage measuring circuit, 50···ignition plug, 60···crankshaft, 70···crank pulse rotor, 80···crank pulse sensor, 100···misfire detector, 101···regular ignition timing calculator, 102···regular ignition signal generator, 103···additional ignition timing calculator, 104···additional ignition signal generator, 105···breakdown determination unit.

## Claims

1. A misfire detector (100) of an internal combustion engine, in which an ignition plug (50) is regularly ignited in the vicinity of a compression top dead center of the internal combustion engine, to burn air-fuel mixture, the misfire detector (100) comprising:
units (103, 104) configured to additionally ignite the ignition plug (50) in an expansion stroke after the regular ignition; and
a unit (105) configured to determine whether breakdown occurs in the ignition plug (50) by the additional ignition, and
the misfire detector (100) configured to judge that the regular ignition results in a misfire in response to determination that breakdown occurs in the ignition plug (50).

2. The misfire detector (100) according to claim 1, wherein the ignition plug (50) is connected to a secondary coil of an ignition coil (10), in which a primary coil and the secondary coil are magnetically joined to each other, the primary coil is configured to generate induced voltage in the secondary coil in response to cutting off electric current that is supplied to the primary coil, and
the unit (105) determines whether breakdown occurs in the ignition plug (50), based on voltage that is generated in the primary coil in a certain determination period after the additional ignition.

3. The misfire detector (100) according to claim 2, wherein the certain determination period is a time period after the additional ignition, between a time when voltage of the primary coil becomes approximately zero in a case in which the regular ignition results in normal combustion, and a time when the voltage of the primary coil becomes approximately zero in a case in which the regular ignition results in a misfire.

4. The misfire detector (100) according to claim 1, wherein the ignition plug (50) is connected to a secondary coil of an ignition coil (10), in which a primary coil and the secondary coil are magnetically joined to each other, the primary coil is configured to generate induced voltage in the secondary coil in response to cutting off electric current that is supplied to the primary coil, and
the unit (105) determines whether breakdown occurs in the ignition plug (50), based on electric current that flows in the primary coil in a certain determination period after the additional ignition.

5. The misfire detector (100) according to claim 1, wherein the ignition plug (50) is connected to a secondary coil of an ignition coil (10), in which a primary coil and the secondary coil are magnetically joined to each other, the primary coil is configured to generate induced voltage in the secondary coil in response to cutting off electric current that is supplied to the primary coil, and
the unit (105) determines whether breakdown occurs in the ignition plug (50), based on voltage that is generated in the secondary coil in a certain determination period after the additional ignition.

6. The misfire detector (100) according to claim 1, wherein the ignition plug (50) is connected to a secondary coil of an ignition coil (10), in which a primary coil and the secondary coil are magnetically joined to each other, the primary coil is configured to generate induced voltage in the secondary coil in response to cutting off electric current that is supplied to the primary coil, and
the unit (105) determines whether breakdown occurs in the ignition plug (50), based on electric current that flows in the secondary coil in a certain determination period after the additional ignition.
